# EUROPEAN PATENT APPLICATION

(11) **EP 1 635 569 A2**
(43) Date of publication of application: **15.03.2006**
(21) Application number: 05019367.1
(22) Date of filing: 06.09.2005
(51) Int. Cl.: H04N 7/14

(54) **Television telephone system, communication terminal device, character information transmission method used therefor, and program**

(30) Priority: 08.09.2004 JP 2004260387
(71) Applicant: NEC CORPORATION, Tokyo (JP)
(72) Inventor: Ikeda, Toshiharu, Tokyo (JP)
(74) Representative: Glawe, Delfs, Moll

(57) **Abstract**

A communication terminal device for making a television telephone communication between communication terminal devices includes: an image processing unit for embedding character information inputted during the television telephone communication into image information transferred through the television telephone communication; and a sending unit for sending the image information into which the character information is embedded by the image processing unit to the communication terminal device of the other party.

## Description

### BACKGROUND OF THE INVENTION

### 1. Field of the Invention

The present invention relates to a television telephone system, a communication terminal device, a character information transmission method used therefor, and a program thereof, and more particularly, to a transmission method of character information in a television telephone.

### 2. Description of the Related Art

A conventional television telephone system makes communication between a calling party and a call destination by using a voice and an image (e.g. moving picture).

In a first conventional television telephone system, the calling party sends the image, the voice, a character string, and a display position of the character string, and the call destination receives those and displays the character string as graphic data. The system concerned mixes the graphic data of the character string with image data, and outputs the mixed data (for example, refer to JP 2003-023612 A).

Further, in a second conventional television telephone system, the call destination receives character information and image information, and displays the character information on a liquid crystal display (hereinafter, referred as LCD) for the character information and displays the image information on an LCD for the image information, respectively. Further, in the system, those LCDs are arranged overlapping each other so as to display the image information while overlapping with and sending the character information (for example, refer to JP 2000-23126 A).

Still further, as a third conventional television telephone system, there is known a television conference system technology in which a sender superimposes an arbitrary character string on the image, and a subscriber extracts and recognizes the character string (for example, refer to JP 09-135428 A).

Yet further, available is a technology for receiving the character string sent by the television telephone system to display the character string on a monitor (for example, refer to JP 06-225295 A), and a technology for making an automatic translation from a voice signal using the television telephone system to synthesize and display translated text thus obtained like a caption on a screen (for example, refer to JP 05-260193).

Still further, in the television conference system, there is known a technology for dividing a screen into plural parts, and displaying the image information, arbitrary character information and graphics on the one screen (for example, refer to JP 05-37930 A).

As described in the above Patent Documents, even if various functions are added to the conventional television telephone systems described above, the conventional television telephone systems have a problem in that both terminals provided with the same function are allowed to use the function concerned.

### SUMMARY OF THE INVENTION

An object of the present invention is to solve the above-mentioned problems and to provide a television telephone system, a communication terminal device, a character information transmission method used therefor, and a program thereof, which are capable of allowing a terminal of the other party having a television telephone function, to display character information together with image information.

A television telephone system for making a television telephone communication between communication terminal devices according to the present invention includes:
image processor which embeds character information inputted during the communication using the television telephone into image information; and
transmitter which sends said image information into which said character information is embedded by said image processor to said communication terminal device of the other party, said image processor and said transmitter being provided to a calling party,
   wherein said image information into which said character information is embedded is displayed on a screen of said communication terminal device of said other party.

Further, a communication terminal device for making a television telephone communication with a communication terminal device of the other party according to the present invention includes:
image processor which embeds character information inputted during the television telephone communication into image information transferred through the television telephone communication; and transmitter which sends the image information into which the character information is embedded by the image processor to the communication terminal device of the other party.

Further, a character information transmission method used for a television telephone system for making a television telephone communication between communication terminal devices according to the present invention provides the steps of:
embedding character information inputted during the television telephone communication into image information transferred through the television telephone communication at the communication terminal device as a calling party; and sending the image information into which the character information is embedded to the communication terminal device of the other party; and displaying the image information into which the character information is embedded on a screen of the communication terminal device of the other party.

Furthermore, a program for a character information transmission method used for a television telephone system for making a television telephone communication between communication terminal devices according to the present invention, which causes a computer to execute the processings of: embedding character information inputted during the television telephone communication into image information transferred through the television telephone communication; sending the image information into which the character information is embedded by the image processing means to the communication terminal device of the other party; and displaying the image information into which the character information is embedded on a screen of the communication terminal device of the other party.

### BRIEF DESCRIPTION OF THE DRAWINGS

These and other objects, features and advantages of the present invention will become more fully apparent from the following detailed description taken in conjunction with accompanying drawings. In the drawings:
FIG. 1 is a block diagram showing a configuration of a cellular phone to be used as a television telephone according to an embodiment of the present invention;
FIG. 2 is a detailed block diagram showing a configuration of a multi-task controller of FIG. 1;
FIG. 3 is a view showing a flow of user interfaces of the present invention;
FIG. 4 is a view showing an embedding example of a character string into an image according to the present invention;
FIG. 5 is a view showing an example of the character string to be embedded into the image according to the present invention;
FIG. 6 is a flowchart showing operations of the cellular phone according to one embodiment of the present invention;
FIG. 7 is a flowchart showing operations of a cellular phone according to a second embodiment of the present invention;
FIG. 8 is a flowchart showing operations of a cellular phone according to a third embodiment of the present invention;
FIG. 9 is a block diagram showing a configuration of a cellular phone according to a fourth embodiment of the present invention;
FIG. 10 is a flowchart showing operations of the cellular phone according to the fourth embodiment of the present invention; and
FIG. 11 is a systemblock diagram of a television telephone system using communication terminal devices each having a television telephone function.

### DETAILED DESCRIPITON OF THE EMBODIMENTS

Hereinafter, each embodiment of the present invention will be described in detail with reference to the drawings.

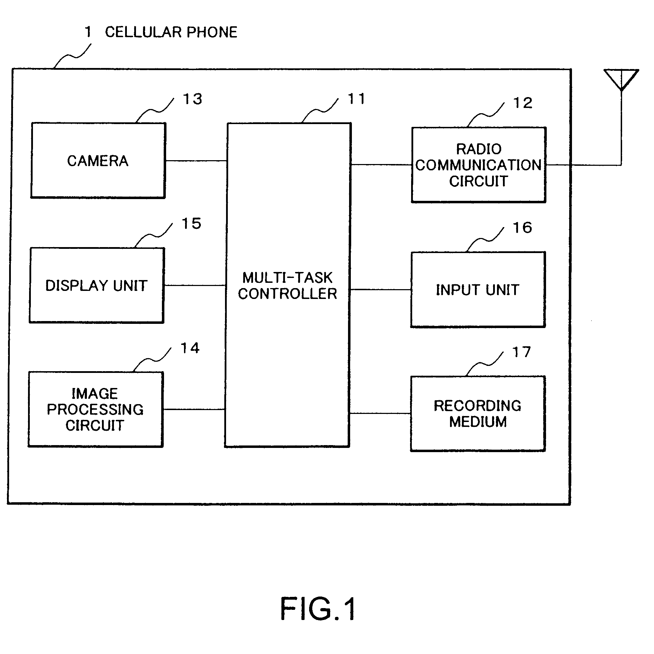

FIG. 1 is a block diagram showing a configuration of a cellular phone to be used as a television telephone according to one embodiment of the present invention. In FIG. 1, a cellular phone 1 is composed of a multi-task controller 11, a radio communication circuit 12 for communicating, a camera 13 for receiving a moving picture, and an image processing circuit 14. Further, the cellular phone 1 is composed of a display unit 15, an input unit 16 for receiving characters, and a recording medium 17.

Here, the image processing circuit 14 compositionally synthesizes the image from the camera 13 and a character string with each other. The recording medium 17 stores a program to be executed by the multi-task controller 11.

Further, the radio communication circuit 12 is well known to those skilled in the art. Therefore, the description thereof will be omitted.

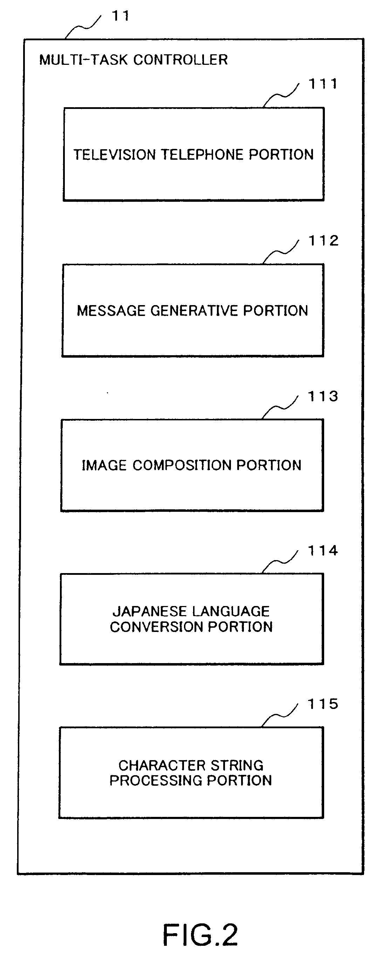

FIG. 2 is a detailed block diagram showing a configuration of the multi-task controller 11 of FIG. 1. In FIG. 2, the multi-task controller 11 is composed of a television telephone portion 111 for making a television telephone communication or call, and a message generative portion 112 for receiving/editing the character string. Further, the multi-task controller 11 is composed of an image composition portion 113, a Japanese language conversion portion 114 for receiving arbitrary characters, and a character string processing portion 115.

Here, the image composition portion 113 embeds the character string into a television telephone image. The character string processing portion 115 performs processing for embedding the received characters into a television screen.

Note that since the multi-task controller 11 edits the character string while making the television telephone communication, the multi-task controller 11 performs a multi-task control for operating a plurality of the above-described respective functions simultaneously.

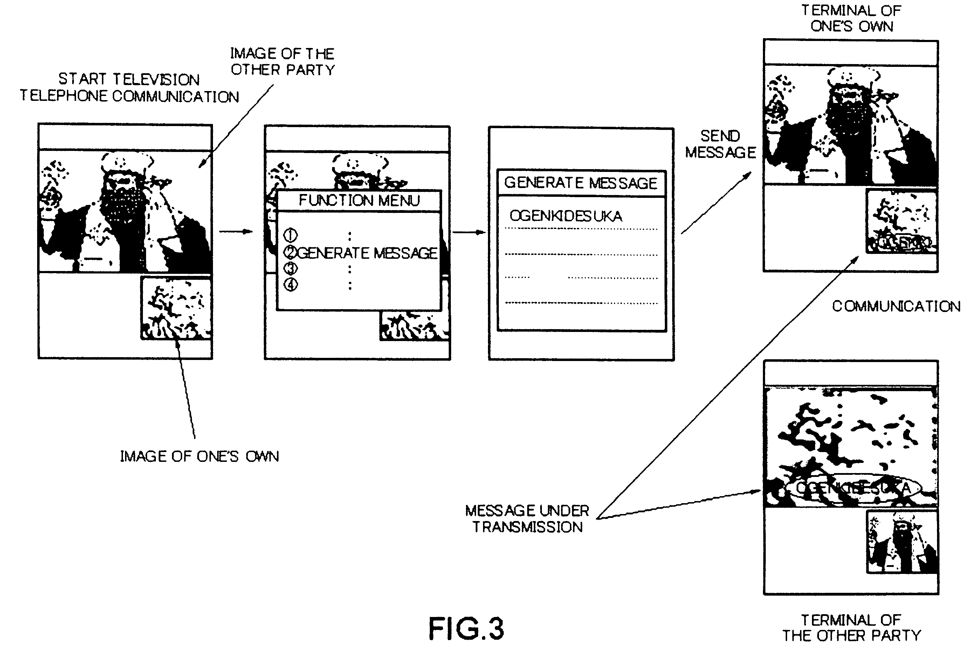

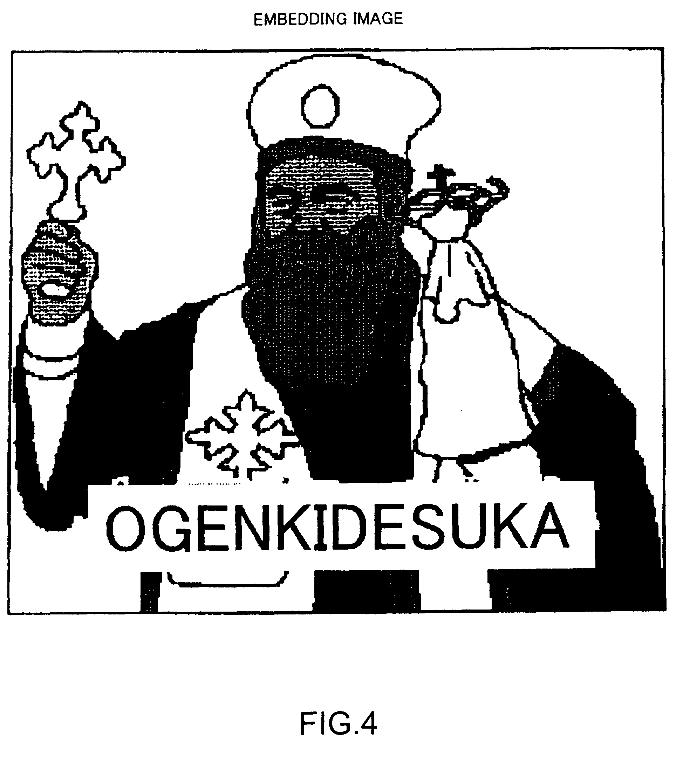

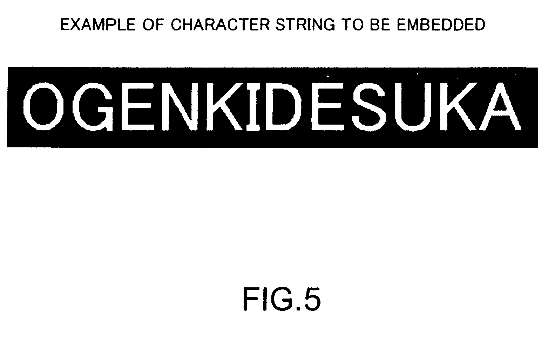

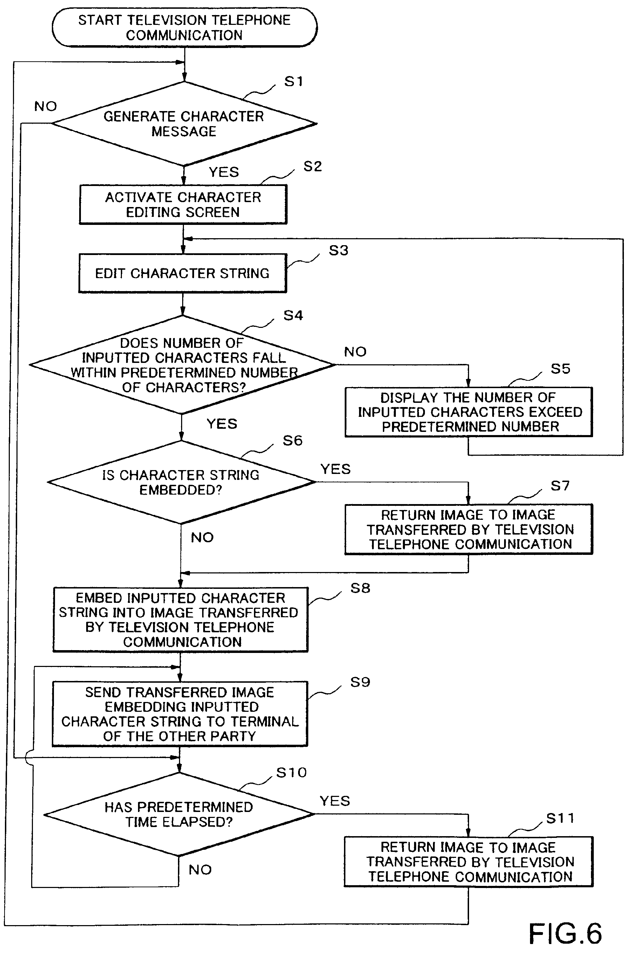

FIG. 3 is a view showing a flow of user interfaces of the present invention. FIG. 4 is a view showing an embedding example of the character string into the image according to the present invention. FIG. 5 is a view showing an example of the character string to be embedded into the image according to the present invention. FIG. 6 is a flowchart showing operations of the cellular phone according to one embodiment of the present invention.

Next, operations of the cellular phone 1 will be described with reference to FIG. 1 to FIG. 6. Note that processing shown in FIG. 6 is realized in such a manner that the multi-task controller 11 of FIG. 1 and FIG. 2 executes the program in the recording medium 17 of FIG. 1.

In general, television telephones exchange voices while sending respective their own images between terminals of the parties. In this embodiment, the characters are inputted to a terminal of one's own and superimposed on the image thereof during the communication by the television telephone. In such a way, the characters are sent together as an image to the terminal of the other party.

Hence, only by directly displaying the received image information, the other party can see a message. Only if being provided with a function of the television telephone, the terminal of the other party can receive the message made of the characters. Further, with regard to the message, every character that can be displayed on the terminal of one's own can be inputted and sent by using the known Japanese language conversion portion 114.

The message embedded into the image is embedded into a position where the message does not disturb the image. For example, the number of characters and the number of lines are limited so as to remain within lower one-third of the screen, and the minimum number of characters that can have contents as the message is considered. Further, image quality of the television telephone has limitations in the current technology, and there is a fear in that the characters become invisible. Therefore, a size, color, thickness, and shape of the embedded characters are considered.

Incidentally, the cellular phone 1 to be used as a constituent of the television telephone system make a call to the terminal of the other party in a similar way to usual television telephones. When entering into a communication state with the terminal of the other party, the cellular phone 1 selects an item of a character message generation as one of its functions by means of a function menu (Step S1 in FIG. 6). The cellular phone 1 activates a character editing screen (Step S2 in FIG. 6), thereby editing the character string (Step S3 in FIG. 6). Next, the cellular phone 1 inputs the characters whose number falls within the number predetermined on the character editing screen, and when the number of inputted characters exceeds the predetermined number, displays a message indicating the excess of the numbers of characters (Steps S3 to S5 in FIG. 6) . Every character stored in the cellular phone 1 is applied as a character capable of being inputted.

Having decided the characters, the cellular phone 1 determines whether or not the character string is embedded into an alternative image prestored in the camera 13 of the cellular phone 1 (Step S6 in FIG. 6). This determination is performed in the following manner. When the characters are embedded into the image, the multi-task controller 11 sets a flag at, for example, "1", and stores the flag in a memory (not shown) in the multi-task controller 11. The cellular phone 1 determines whether or not the character string is embedded depending on whether the flag stored in the memory is "1" or "0".

When the character string is not embedded, the cellular phone 1 embeds the decided character string into an image that is being imaged by the camera 13 or the prestored alternative image (Step S8 in FIG. 6), and sends the image and the character string embedded therein to the terminal of the other party (Step S9 in FIG. 6).

Here, the alternative image is an image to be sent to the terminal of the other party in place of the image that is being imaged at real time by the camera 13 of the cellular phone 1. The alternative image is one already imaged by the camera 13 and stored in the recording medium 17 of the cellular phone 1. It is possible to embed the characters into the alternative image no matter if the alternative image is a static image or a moving picture. Further, it is possible to monitor a state of the character string under transmission by means of a sub-screen of the cellular phone 1.

For example, referring to FIG. 3, at the time of starting the television telephone communication, an image information of the other party is displayed on the display screen of the cellular phone, and the image of one's own is displayed small on a lower right portion of the display screen. In this state, the user generates the message by means of the function menu. For example, the user inputs characters of a message saying "Ogenkidesuka (How are you?)". While the message is being sent, "Ogenkidesuka" is displayed as a message under transmission on the lower right portion of the cellular phone as the one's own terminal. Meanwhile, on the display screen of the terminal of the other party, the message under transmission, saying "Ogenkidesuka", is displayed on an image information of the other party, which is being displayed at present.

FIG. 4 shows a state where the character string is embedded as the message into the image. FIG. 5 shows an example of the character string to be embedded into the image.

After a preset given time has elapsed since the image into which the character string was embedded was sent to the terminal of the other party (Step S10 in FIG. 6), the cellular phone 1 returns the image to be sent to the terminal of the other party to the image that is being imaged by the camera 13 or the prestored alternative image, into each of which the characters are not embedded, and then goes back to Step S1 (Step S11 in FIG. 6). Specifically, the embedded character string is automatically deleted after the elapse of the predetermined time, for example, after a few seconds. If the given time preset to automatically delete the character string has not elapsed since the image into which the character string was embedded was sent to the terminal of the other party (Step S10 in FIG. 6), the cellular phone 1 goes back to Step S9, and repeats the operation of sending the image into which the characters are embedded to the terminal of the other party.

Meanwhile, in the case where a new character string is desired to be inputted according to the determination of Step S6, the cellular phone 1 determines whether or not the character string is embedded into the image that is being imaged by the camera 13 or the prestored alternative image (Step S6 in FIG. 6). If the character string has been already embedded, the cellular phone 1 returns the image to the image that is being imaged by the camera 13 or the prestored alternative image (Step S7 in FIG. 6). The cellular phone 1 embeds the decided new character string into the image that is being imaged by the camera 13 or the prestored alternative image (Step S8 in FIG. 6), and sends the image and the character string embedded therein to the terminal of the other party (Step S9 in FIG. 6) . Specifically, the newly decided character string is overwritten on the above-described character string embedded into the image, and is sent to the terminal of the other party.

In the current technology, the high image quality of the television telephone cannot be expected because of a high compression ratio of the image and a variable state of a radio wave. Accordingly, as shown in FIG. 4 and FIG. 5, it is considered to highlight outlines of the characters by edging the outlines by a color different from a color of the characters so that the characters cannot be inconspicuous because of a small size of the characters embedded into the image and the color of the image, which is similar to the color of the characters.

As described above, though television telephone, the cellular phone 1 can send the message not by the voice but by the characters. Only if the terminal of the other party has the function of the television telephone, it is possible for the terminal concerned to receive the message even if no special function is provided therein. Further, by superimposing the character information on the image information displaying the one's figure, it is possible to make an expression as if the one (sender) were speaking.

Note that in the present invention, power of expression is increased regarding the characters to be embedded if the number of types of fonts is increased and the fonts are combined with a function to process the fonts. In addition, an expression such as a balloon becomes possible by superimposing the character string on the image in a combination manner.

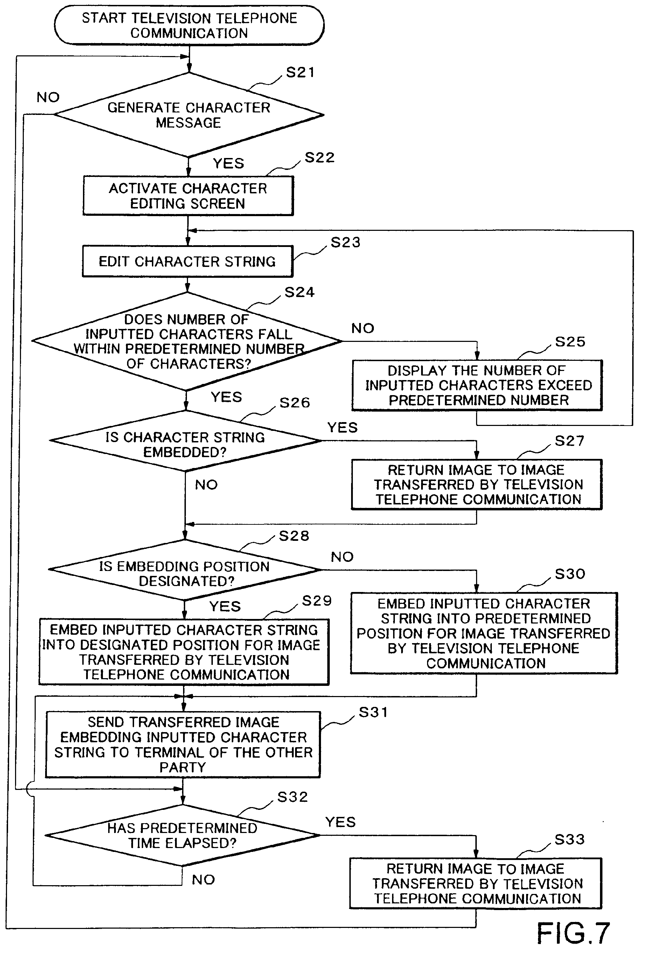

FIG. 7 is a flowchart showing operations of a cellular phone according to the second embodiment of the present invention. The cellular phone in this embodiment has a similar configuration to that of the cellular phone 1 shown in FIG. 1 and FIG. 2, and basic operations thereof are similar to the operations of the above-described cellular phone 1.

Further, as an auxiliary function, the cellular phone according to this embodiment sets places on the screen, into which the characters are to be embedded, by the image composition portion 113 of the multi-task controller 11. Hereinafter, description will be made of the operations of the cellular phone according to the second embodiment of the present invention with reference to FIG. 1 to FIG. 5 and FIG. 7. Note that processing shown in FIG. 7 is realized in such a manner that the multi-task controller 11 executes the program of the recording medium 17.

The cellular phone 1 makes a call to the terminal of the other party in a similar way to usual television telephones. When entering into a communication state with the terminal of the other party, the cellular phone 1 selects an item of a character message generation as one of its functions by means of a function menu (Step S21 in FIG.7). The cellular phone 1 activates a character editing screen (Step S22 in FIG. 7), thereby editing the character string (Step S23 in FIG. 7) . Next, the cellular phone 1 inputs the characters whose number falls within the number predetermined on the character editing screen, and when the number of inputted characters exceeds the predetermined number, displays a message indicating the excess of the numbers of characters (Steps S23 to S25 in FIG. 7). Every character stored in the cellular phone 1 is applied as a character capable of being inputted.

Having decided the characters, the cellular phone 1 determines whether or not the character string is embedded into an alternative image prestored in the camera 13 of the cellular phone 1 (Step S26 in FIG. 7) . This determination is performed in the following manner. When the characters are embedded into the image, the multi-task controller 11 sets a flag at, for example, "1", and stores the flag in a memory (not shown) in the multi-task controller 11. The cellular phone 1 determines whether or not the character string is embedded depending on whether the flag stored in the memory is "1" or "0".

When the character string is not embedded and the embedding positions are designated (Step S28 in FIG. 7), the cellular phone 1 embeds the decided character string into an image that is being imaged by the camera 13 or the prestored alternative image, and sends the image and the character string to the terminal of the other party (Step S31 in FIG. 7).

Unless the embedding positions are designated (Step S28 in FIG. 7), the cellular phone 1 embeds the character string into the preset given position for the image that is being imaged by the camera 13 or the prestored alternative image (Step S30 in FIG. 7), and sends the image and the character string embedded therein to the terminal of the other party (Step S31 in FIG. 7) . After a preset given time has elapsed since the image into which the characters were embedded was sent to the terminal of the other party (Step S32 in FIG. 7), the cellular phone 1 returns the image to be sent to the terminal of the other party to the image that is being imaged by the camera 13 or the prestored alternative image, into each of which the characters are not embedded, and then goes back to Step S21 (Step S33 in FIG. 7) . Specifically, the embedded character string is automatically deleted after the elapse of the predetermined time, for example, after a few seconds. Unless the given time preset to automatically delete the character string has elapsed since the image into which the characters were embedded was sent to the terminal of the other party (Step S32 in FIG. 7), the cellular phone 1 goes back to Step S31, and repeats the operation of sending the image into which the characters are embedded to the terminal of the other party.

Meanwhile, in the case where a new character string is desired to be inputted according to the determination of Step S26, the cellular phone 1 determines whether or not the character string is embedded into the image that is being imaged by the camera 13 or the prestored alternative image (Step S26 in FIG. 7). If the character string has been already embedded, the cellular phone 1 returns the image to the image that is being imaged by the camera 13 or the prestored alternative image (Step S27 in FIG. 7). If the embedding position are designated (Step S28 in Fig. 7), the cellular phone 1 embeds the character string into the present given position for the image that is being imaged by the camera 13 or the prestored alternative image (Step S29 in FIG. 7), and sends the image and the character string embedded therein to the terminal of the other party (Step S31 in FIG. 7) .

Unless the embedding positions are designated (Step S28 in FIG. 7), the cellular phone 1 embeds the character string into the preset given position for the image that is being imaged by the camera 13 or the prestored alternative image (Step S30 in FIG. 7), and sends the image and the character string to the terminal of the other party (Step S31 in FIG. 7) . Specifically, the newly decided new character string is overwritten on the character string already embedded into the image, and is sent to the terminal of the other party.

As described above, in the present invention, the character string is superimposed on the image at the designated position in a combination manner. In such a way, the power of expression is increased regarding the characters to be embedded, and the expression such as a balloon is made possible.

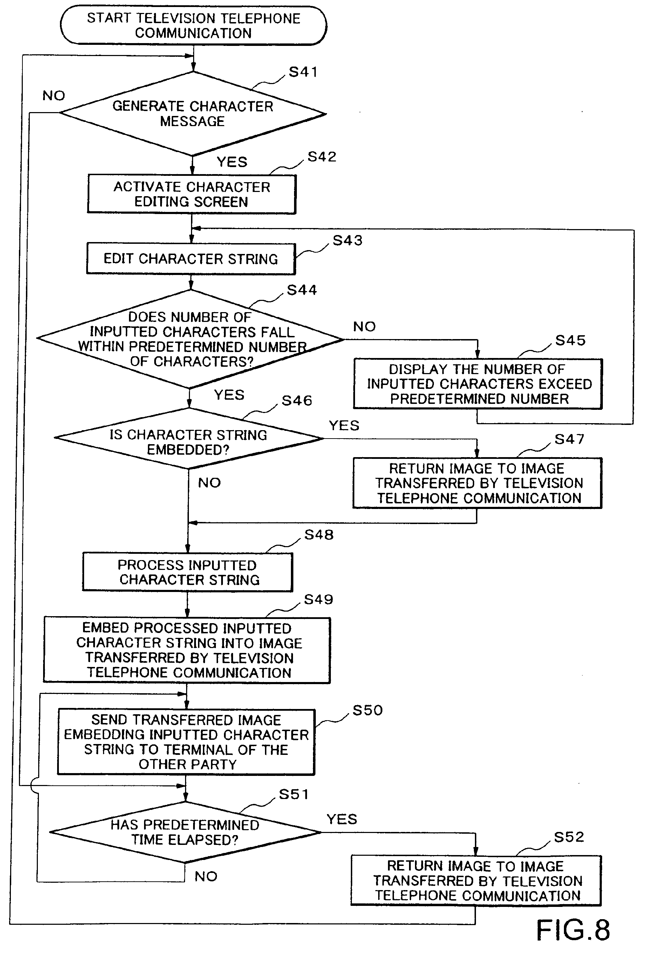

FIG. 8 is a flowchart showing operations of a cellular phone according to the third embodiment of the present invention. The cellular phone in FIG. 8 has a similar configuration to that of the cellular phone 1 shown in FIG. 1 and FIG. 2, and basic operations thereof are similar to the operations of the above-described cellular phone 1.

The cellular phone according to this embodiment has an auxiliary function including a function to set the size and color of the characters embedded into the screen by means of the character string processing portion 115 of the multi-task controller 11. Hereinafter, description will be made of the operations of the cellular phone according to the third embodiment of the present invention with reference to FIG. 1 to FIG. 5 and FIG. 8.

Note that processing shown in FIG. 8 is realized in such a manner that the multi-task controller 11 executes the program of the recording medium 17.

The cellular phone makes a call to the terminal of the other party in a similar way to usual television telephones. When entering into the communication state with the terminal of the other party, the cellular phone selects an item of a character message generation as one of its functions by means of the function menu (Step S41 in FIG. 8). By activating the character editing screen (Step S42 in FIG. 8), the cellular phone edits the character string (Step S43 in FIG. 8). Subsequently, the cellular phone inputs the characters whose number falls within the number predetermined on the character editing screen, and when the number of inputted characters exceeds the predetermined number, displays the message indicating the excess of the numbers of characters (Steps S43 to S45 in FIG. 8). Every character stored in the cellular phone 1 is applied as the character capable of being inputted.

Having decided the characters, the cellular phone 1 determines whether or not the character string is embedded into the alternative image prestored in the camera 13 of the cellular phone 1 (Step S46 in FIG. 8) . This determination is performed in the following manner. When the characters are embedded into the image, the multi-task controller 11 sets the flag at, for example, "1", and stores the flag in the memory (not shown) in the multi-task controller 11. The cellular phone 1 determines whether or not the character string is embedded depending on whether the flag stored in the memory is "1" or "0".

Unless the character string is embedded, the cellular phone 1 performs processing so that the characters cannot be inconspicuous despite the small size of the characters embedded into the image and the color of the image, which is similar to the color of the characters. Specifically, the cellular phone 1 performs the processing for the inputted character string, such as highlighting the outlines of the characters by edging the outlines by the color different from the color of the characters (Step S48 in FIG. 8). Subsequently, the cellular phone 1 embeds the processed character string into the image that is being imaged by the camera 13 or the prestored alternative image (Step S49 in FIG. 8), and sends the image and the character string embedded therein to the terminal of the other party (Step S50 in FIG. 8).

After a preset given time has elapsed since the image into which the character string was embedded was sent to the terminal of the other party (Step S51 in FIG. 8), the cellular phone 1 returns the image to be sent to the terminal of the other party to the image that is being imaged by the camera 13 or the prestored alternative image, into each of which the characters are not embedded, and then goes back to Step S41 (Step S52 in FIG. 8). Specifically, the embedded character string is automatically deleted after the elapse of the predetermined time, for example, after a few seconds. If the given time preset to automatically delete the character string has not elapsed since the image into which the character string was embedded was sent to the terminal of the other party (Step S51 in FIG. 8), the cellular phone 1 goes back to Step S50, and repeats the operation of sending the image into which the characters are embedded to the terminal of the other party.

Meanwhile, in the case where a new character string is desired to be processed and inputted according to the determination of Step S46, the cellular phone 1 determines whether or not the character string is embedded into the image that is being imaged by the camera 13 or the prestored alternative image (Step S46 in FIG. 8). If the character string has been already embedded, the cellular phone 1 returns the image to the image that is being imaged by the camera 13 or the prestored alternative image (Step S47 in FIG. 8), and processes the inputted character string (Step S48 in FIG. 8). The cellular phone 1 embeds the processed character string into the image that is being imaged by the camera 13 or the prestored alternative image (Step S49 in FIG. 8), and sends the image and the character string to the terminal of the other party (Step S50 in FIG. 8). Specifically, the newly decided processed character string is overwritten on the character string already embedded into the image, and is sent to the terminal of the other party.

As described above, in the third embodiment, it is possible to make the characters not to be inconspicuous despite the small size of the characters embedded into the image and the color of the image, which is similar to the color of the characters. Hence, the processing such as highlighting the outlines of the characters by edging the outlines using the color different from the color of the characters is performed, thus making it possible to accurately pass the message in the image displayed on the terminal of the other party, to the other party.

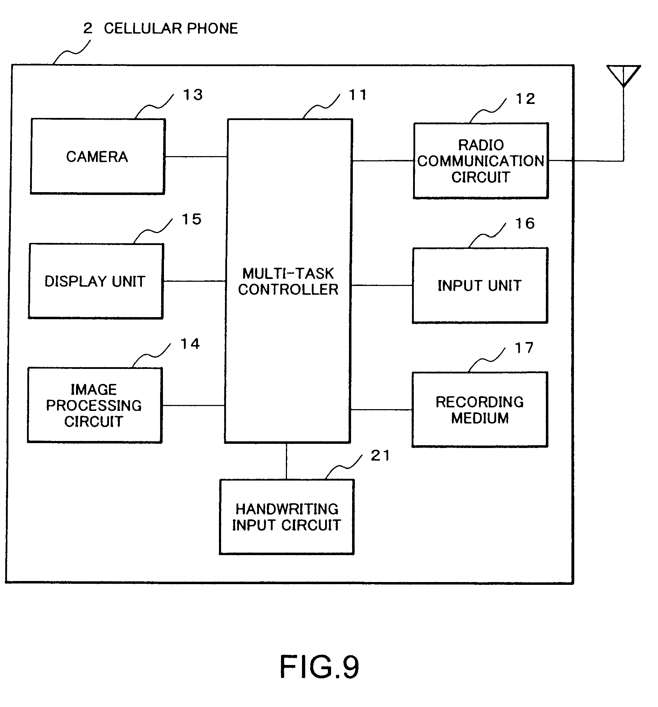

FIG. 9 is a block diagram showing a configuration of the cellular phone according to the fourth embodiment of the present invention. In FIG. 9, a cellular phone 2 has a similar configuration to that of the cellular phone 1 shown in FIG. 1 except that a handwriting input circuit 21 is added to the cellular phone 2, in which the same reference numerals are assigned to the same constituents as in the cellular phone 1 of FIG. 1.

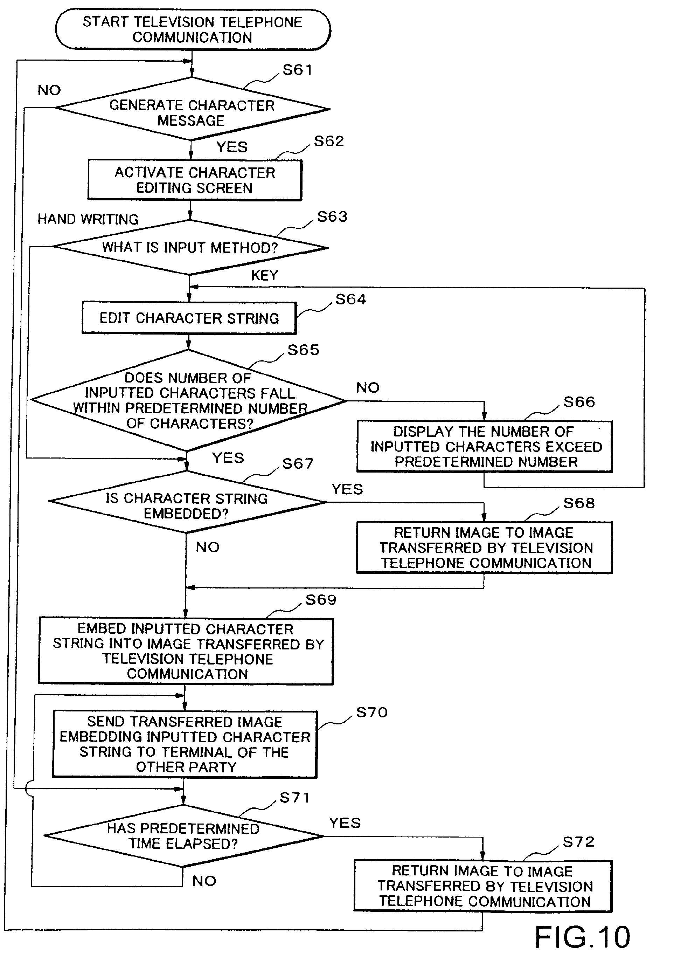

Further, FIG. 10 is a flowchart showing operations of the cellular phone according to this embodiment. Note that a configuration of a multi-task controller 11 of the cellular phone 2 in FIG. 9 is similar to the configuration of the multi-task controller 11 shown in FIG. 2, and basic operations thereof are similar to the operations of the above-described cellular phone 1 according to the first embodiment of the present invention.

The cellular phone 2 in FIG. 9 has the handwriting input circuit 21 added thereto, thus making it possible to embed handwritten characters into the image and to send the image and the handwritten characters embedded therein. Specifically, handwriting is performed on a touch panel of the display unit 15 by means of a light pen and the like.

Hereinafter, description will be made of the operations of the cellular phone with reference to FIG. 2 to FIG. 5, FIG. 9, and FIG. 10. Note that processing shown in FIG. 10 is realized in such a manner that the multi-task controller 11 executes the program of the recording medium 17.

The cellular phone 2 makes a call to the terminal of the other party in a similar way to usual television telephones. When entering into the communication state with the terminal of the other party, the cellular phone 2 selects the item of the character message generation as one of its functions by means of the function menu, and activates the character editing screen (Steps S61 and S62 in FIG. 10). Next, on the character editing screen, either the handwriting or inputting by using keys of the input unit 16 is selected as an input method (Step S63 in FIG. 10).

In the case of the handwriting (Step S63 in FIG. 10), the cellular phone 2 determines whether the character string is embedded into the image that is being imaged by the camera 13 of the cellular phone 2 or the prestored alternative image (Step S67 in FIG. 10). This determination is performed in the following manner. When embedding the characters into the image, the multi-task controller 11 sets the flag at, for example, "1", and stores the flag in the memory (not shown) in the multi-task controller 11. The cellular phone 2 determines whether or not the character string is embedded depending on whether the flag stored in the memory is "1" or "0".

Unless the character string is embedded, the cellular phone 2 embeds the handwritten character string into the image that is being imaged by the camera 13 or the prestored alternative image (S69 in FIG. 10), and sends the image and the character string embedded therein to the terminal of the other party (Step S70 in FIG. 10).

When the characters are inputted by the keys (Step S63 in FIG. 10), the cellular phone 2 edits the character string, inputs the characters whose number falls within the predetermined number, and when the number of characters exceeds the predetermined number,displays the message indicating the excess of the numbers of characters (Steps S64 to S66 in FIG. 10). Every character stored in the cellular phone 2 is applied as the character capable of being inputted. Unless the character string is embedded (Step S67 in FIG. 10) upon determining the characters, the cellular phone 2 embeds the character string inputted by the keys into the image that is being imaged by the camera 13 or the prestored alternative image (Step S69 in FIG. 10), and sends the image and the character string embedded therein to the terminal of the other party (S70 in FIG. 10).

After a preset given time has elapsed since the image into which the character string was embedded was sent to the terminal of the other party (Step S71 in FIG. 10), the cellular phone 2 returns the image to be sent to the terminal of the other party to the image that is being imaged by the camera 13 or the prestored alternative image, into each of which the characters are not embedded, and then goes back to Step S61 (Step S72 in FIG. 10) . Specifically, the embedded character string is automatically deleted after the elapse of the predetermined time, for example, after a few seconds. If the given time preset to automatically delete the character string has not elapsed since the image into which the character string was embedded was sent to the terminal of the other party (Step S71 in FIG. 10), the cellular phone 2 goes back to Step S70, and repeats the operation of sending the image into which the characters are embedded to the terminal of the other party.

Meanwhile, in the case where a new character string such as a handwritten one is desired to be inputted according to the determination of Step S67, the cellular phone 2 determines whether or not the character string is embedded into the image that is being imaged by the camera 13 or the prestored alternative image (Step S67 in FIG. 10) . If the character string has been already embedded, the cellular phone 2 returns the image to the image that is being imaged by the camera 13 or the prestored alternative image (Step S68 in FIG. 10). The cellular phone 2 embeds the handwritten character string or the character string inputted by key into the image that is being imaged by the camera 13 or the prestored alternative image (Step S69 in FIG. 10), and sends the image and the character string embedded therein to the terminal of the other party (Step S70 in FIG. 10). Specifically, the newly decided character string is overwritten on the above-described character string embedded into the image, and is sent to the terminal of the other party.

As described above, in this fourth embodiment, the handwriting input circuit 21 is added, thus making it possible to embed the handwritten characters into the image and to send the image and the characters embedded therein.

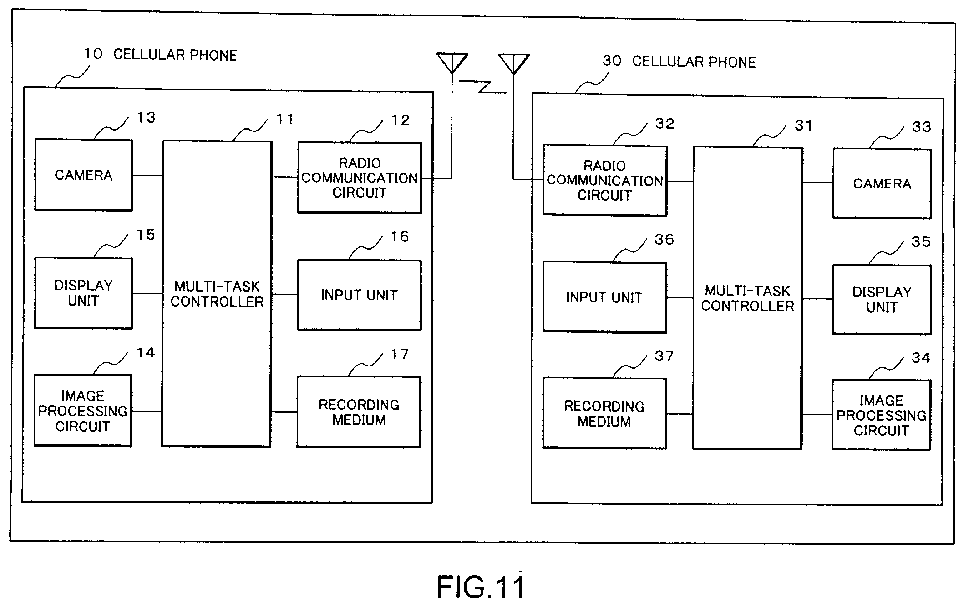

Next, FIG. 11 is a system block diagram of the television telephone system using communication terminal devices each having the above-described television telephone function.

In FIG. 11, a cellular phone 10 and a cellular phone 30 are used as the communication terminal devices to be used as television telephones, and a television telephone communication is performed between the cellular phone 10 and the cellular phone 30.

The cellular phone 10 and the cellular phone 30 include the configurations of the cellular phones 1 and 2 in FIG. 1 and FIG. 9, which have been described in the above-described first to fourth embodiments, and operate in the same way.

The cellular phone 10 as a calling party embeds the character information inputted during the television telephone communication into the image information, and sends the image information and the character information embedded therein to the cellular phone 30 of the other party. The cellular phone 30 of the other party displays, on its screen, the image information into which the character information is embedded. Specifically, the cellular phone 30 of the other party, which includes the television telephone function, can be allowed to display the character information together with the image information thereon.

Note that the present invention is not limited to the above-described cellular phones, and has a function effective in a telephone communication using a real-time image. The present invention is also applicable to various terminals such as a personal computer (PC), a personal digital assistant (PDA), and others, which can make the television telephone communication.

While the present invention has been described in connection with certain preferred embodiments, it is to be understood that the subject matter encompassed by way of this invention is not to be limited to those specific embodiments. On the contrary, it is intended for the subject matter of the present invention to include all alternatives, modification, and equivalents as can be included within the spirit and scope of the following claims.

## Claims

1. A television telephone system for making a television telephone communication between communication terminal devices, comprising:
image processing means for embedding character information inputted during the communication using the television telephone into image information; and
sendingmeans for sending said image information into which said character information is embedded by said image processing means to said communication terminal device of the other party, said image processing means and said sending means being provided to a calling party,
wherein said image information into which said character information is embedded is displayed on a screen of said communication terminal device of said other party.

2. A television telephone system for making a television telephone communication between communication terminal devices, comprising:
image processor which embeds character information inputted during the communication using the television telephone into image information; and
transmitter which sends said image information into which said character information is embedded by said image processor to said communication terminal device of the other party, said image processor and said transmitter being provided to a calling party,
wherein said image information into which said character information is embedded is displayed on a screen of said communication terminal device of said other party.

3. The television telephone system according to claim 2, wherein said character information is edged, and embedded into said image information transferred through said television telephone communication.

4. The television telephone system according to claim 2, wherein said character information is set at a minimum size at which said character information is recognizable, and embedded into said image information transferred through said television telephone communication.

5. The television telephone system according to claim 2, wherein said communication terminal device as the calling party further comprises: a Japanese language conversion function for inputting said character information; and an editing function for editing said character information.

6. The television telephone system according to claim 2, wherein said image processing means embeds said character information into a position in said image information, the position being designated from an outside.

7. The television telephone system according to claim 2, wherein said communication terminal device as the calling party further comprises handwritten character inputting means for inputting handwritten characters, and said handwritten characters inputted by said handwritten character inputting means are embedded into said image information transferred through said television telephone communication.

8. The television telephone system according to claim 2, wherein said communication terminal device as the calling party and said communication terminal device of the other party are each a cellular phone of a mobile communication system.

9. The television telephone system according to claim 2, wherein said character information embedded into said image information is deleted after an elapse of a preset given time.

10. The television telephone system according to claim 9, wherein, when new character information is inputted before said character information is deleted after the elapse of the given time, said character information is overwritten by said new character information and deleted.

11. A communication terminal device for making a television telephone communication with a communication terminal device of the other party, said communication terminal device as a calling party comprising: image processing means for embedding character information inputted during the television telephone communication into image information transferred through the television telephone communication; and means for sending the image information into which the character information is embedded by the image processing means to the communication terminal device of the other party.

12. A communication terminal device for making a television telephone communication with a communication terminal device of the other party, said communication terminal device as a calling party comprising: image processor which embeds character information inputted during the television telephone communication into image information transferred through the television telephone communication; and transmitter which sends the image information into which the character information is embedded by the image processor to the communication terminal device of the other party.

13. The communication terminal device according to claim 12, wherein said character information is edged, and embedded into said image information transferred through said television telephone communication.

14. The communication terminal device according to claim 12, wherein said character information is set at a minimum size at which said character information is recognizable, and embedded into said image information transferred through said television telephone communication.

15. The communication terminal device according to claim 12, further comprising: a Japanese language conversion function for inputting said character information; and an editing function for editing said character information.

16. The communication terminal device according to claim 12, wherein said image processing means embeds said character information into a position in said image information, said position being designated from an outside.

17. The communication terminal device according to claim 12, further comprising handwritten character inputting means for inputting handwritten characters, and said handwritten characters inputted by said handwritten character inputting means are embedded into said image information transferred through said television telephone communication.

18. The communication terminal device according to claim 12, wherein said communication terminal device is a cellular phone of a mobile communication system.

19. The communication terminal device according to claim 12, wherein said character information embedded into said image information is deleted after an elapse of a preset given time.

20. The communication terminal device according to claim 19, wherein, when new character information is inputted before said character information is deleted after the elapse of the given time, said character information is overwritten by said new character information and is deleted.

21. A character information transmission method used for a television telephone system for making a television telephone communication between communication terminal devices, the method comprising the steps of:
embedding character information inputted during said television telephone communication into image information transferred through said television telephone communication at said communication terminal device as a calling party; and sending said image information into which said character information is embedded to said communication terminal device of the other party; and displaying said image information into which said character information is embedded on a screen of said communication terminal device of said other party.

22. The character information transmission method according to claim 21, wherein said character information is edged, and embedded into said image information transferred through said television telephone communication.

23. The character information transmission method according to claim 21, wherein said character information is set at a minimum size at which said character information is recognizable, and embedded into said image information transferred through said television telephone communication.

24. The character information transmission method according to claim 21, wherein said communication terminal device as the calling party further comprises: a Japanese language conversion function for inputting said character information; and an editing function for editing said character information.

25. The character information transmission method according to claim 21, wherein the step of embedding said character information into said image information transferred through said television telephone communication comprises embedding the character information into a position in said image information, the position being designated from an outside.

26. The character information transmission method according to claim 21, further comprising the step of inputting handwritten character at said communication terminal device as the calling partyside,and embeddingsaid handwritten characters inputted into said image information transferred through said television telephone communication.

27. The character information transmission method according to claim 21, wherein said communication terminal device as said calling party and said communication terminal device of the other party are each a cellular phone of a mobile communication system.

28. The character information transmission method according to claim 21, wherein said character information embedded into said image information is deleted after an elapse of a preset given time.

29. The character information transmission method according to claim 28, wherein, when new character information is inputted before said character information is deleted after the elapse of the given time, said character information is overwritten by said new character information and deleted.

30. A program for a character information transmission method used for a television telephone system for making a television telephone communication between communication terminal devices, said program being for causing a computer to execute the processings of: embedding character information inputted during said television telephone communication into image information transferred through the television telephone communication; sending said image information into which said character information is embedded by said image processing means to said communication terminal device of the other party; and displaying said image information into which said character information is embedded on a screen of said communication terminal device of said other party.
